# EUROPÄISCHE PATENTSCHRIFT

(11) **EP 1 680 791 B1**
(45) Veröffentlichungstag und Bekanntmachung des Hinweises auf die Patenterteilung: **09.01.2008**
(21) Anmeldenummer: 04802679.3
(22) Anmeldetag: 05.11.2004
(51) Int. Cl.: H01G 9/038

(54) **ELEKTROLYTLÖSUNG UND ELEKTROCHEMISCHER DOPPELSCHICHTKONDENSATOR MIT DER ELEKTROLYTLÖSUNG**
ELECTROLYTE SOLUTION AND ELECTROCHEMICAL DOUBLE-LAYER CAPACITOR COMPRISING SAID SOLUTION
SOLUTION ELECTROLYTIQUE ET CONDENSATEUR BICOUCHE ELECTROCHIMIQUE COMPRENANT UNE TELLE SOLUTION ELECTROLYTIQUE

(30) Priorität: 06.11.2003 DE 10351899
(43) Veröffentlichungstag der Anmeldung: 19.07.2006
(73) Patentinhaber: EPCOS AG, 81669 München (DE)
(72) Erfinder: SCHWAKE, Andree, 89520 Heidenheim (DE)
(74) Vertreter: Epping, Wilhelm
(86) Internationale Anmeldenummer: PCT/DE2004/002451
(87) Internationale Veröffentlichungsnummer: WO 2005/045861

(56) Entgegenhaltungen:
- EP-A- 1 324 358
- DE-A1- 19 851 571
- PATENT ABSTRACTS OF JAPAN Bd. 1997, Nr. 05, 30. Mai 1997 (1997-05-30) & JP 09 007897 A (MITSUBISHI CHEM CORP), 10. Januar 1997 (1997-01-10)
- PATENT ABSTRACTS OF JAPAN Bd. 2003, Nr. 03, 5. Mai 2003 (2003-05-05) & JP 2002 326977 A (MITSUBISHI GAS CHEM CO INC), 15. November 2002 (2002-11-15)
- PATENT ABSTRACTS OF JAPAN Bd. 1999, Nr. 11, 30. September 1999 (1999-09-30) & JP 11 162790 A (MITSUBISHI CHEMICAL CORP), 18. Juni 1999 (1999-06-18)

## Beschreibung

Elektrochemische Doppelschichtkondensatoren werden im Leistungsbereich eingesetzt, da sie sich mit hohen Kapazitäten bei gleichzeitig sehr kleinem ESR verwirklichen lassen. Beispielsweise als temporärer Energiespeicher genutzt, müssen Doppelschichtkondensatoren in relativ kurzen Zeiträumen von einigen Sekunden und weniger hohe Ströme und damit verbunden hohe Energien abgeben oder aufnehmen. Damit dies möglichst verlustfrei erfolgen kann, muß der elektrische Innenwiderstand der Kondensatoren minimiert werden.

Ein elektrochemischer Doppelschichtkondensator besteht im wesentlichen aus zwei Elektroden, die entweder mit einem Elektrodenmaterial hoher Oberfläche beschichtet sind oder von sich aus eine hohe Oberfläche aufweisen, z.B. Aluminiumstromkollektoren beschichtet mit Aktivkohlenstoffpulver oder Kohlenstofftücher als Elektroden. Zwischen den beiden Elektroden ist ein Separator angeordnet, der zur elektrischen Isolation der beiden Elektrodenschichten dient, der porös ausgebildet ist und den Elektrolyten aufnehmen kann und der darüber hinaus für den Elektrolyten und insbesondere für die Ionen, die sich durch Dissoziation des im Elektrolyten gelösten Leitsalzes ausbilden, durchlässig ist. Der Separator ist normalerweise aus Papier, Kunststoffolie, Filz oder Gewebe aus Kunststoff- oder Glasfasern ausgewählt.

Eine einfache Kondensatorzelle besteht dabei aus zumindest zwei Elektroden und einer dazwischenliegenden Separatorschicht. Üblicherweise werden jedoch zur Erhöhung der Kapazität mehrere Elektrodenlagen und Separatorschichten alternierend übereinandergestapelt, beispielsweise als planarer Stapel oder noch einfacher und platzsparender in Form eines sogenannten Wickels. Nach dem Herstellen eines Stapels aus Elektroden und Separatorschichten wird dieser in ein Gehäuse eingebracht und mit einem Elektrolyten, z.B. einer Elektrolytlösung imprägnierte.

Standardelektrolytlösungen für Doppelschichtkondensatoren enthalten in der Regel Acetonitril als Lösungsmittel. Acetonitril weist eine sehr geringe Viskosität und relativ hohe Polarität auf, so daß mit Acetonitril sehr hohe Leitfähigkeiten von bis zu 70 mS/cm bei Raumtemperatur realisiert werden können. Diese hohen Leitfähigkeiten lassen sich mit anderen Lösungsmitteln außer Acetonitril, beispielsweise Propylencarbonat nicht erreichen. Nachteilig an diesen hochleitfähigen, Acetonitril enthaltenden Elektrolytlösungen ist, daß diese leicht entzündlich sind und sich wegen ihrem hohen Dampfdruck nur schwer verarbeiten lassen.

Aus der WO 02/061776 A sind acetonitrilfreie. Elektrolytlösungen für elektrochemische Zellen bekannt, die ein Gemisch von zwei verschiedenen Lösungsmitteln, z.B. 3-Methyl-2-Oxazolididon, Methylformiat, Ethylacetat, Ethylmethylketon oder Aceton und als Leitsalz Tetraethylammoniumtetrafluoroborat enthalten. Lösungsmittel wie Aceton, Methylformiat oder Ethylmethylketon haben den Nachteil, daß sie eine geringere Spannungsstabilität als Acetonitril aufweisen. Im Ethylacetat sind herkömmliche Leitsalze nur schlecht löslich und Lösungsmittel wie Aceton oder Methylformiat sind darüber hinaus leicht flüchtig, so daß es während des Betriebs des Kondensators zu Veränderungen der Lösungsmittelzusammensetzung der Elektrolytlösung aufgrund Verdunstung von einzelnen Lösungsmittelkomponenten kömmen kann.

Aus der EP 1 324 358 A2 ist ein elektrischer Doppelschicht kondensator bekannt, dessen Elektrolytlösung ein Salz der Formel R₁R₂R₃R₄N⁺X⁻ und als Lösungsmittel Dimethylcarbonat oder Mischungen daraus' mit weiteren Lösungsmitteln enthält. R1 ist dabei eine n-Propyl-Gruppe, die übrigen Reste sind unabhängig voneinander Methyl- oder Ethylgruppen. Das Anion X⁻ kann BF₄⁻, PF₆⁻, CF₃SO₃⁻ und (CF₃SO₂)₂N⁻ sein.

Aufgabe der vorliegenden Erfindung ist es, eine Elektrolytlösung mit hoher Leitfähigkeit anzugeben, die kein Acetonitril enthält und die oben genannten Nachteile bekannter Elektrolytlösungen vermeidet.

Diese Aufgabe wird erfindungsgemäß durch eine Elektrolytlösung mit den Merkmalen des Anspruchs 1 gelöst. Vorteilhafte Ausgestaltungen der Elektrolytlösung sowie ein elektrochemischer Doppelschichtkondensator mit der Elektrolytlösung sind Gegenstand weiterer Ansprüche.

Eine erfindungsgemäße Elektrolytlösung weist kein Acetonitril und nur ein Lösungsmittel auf, hat eine Leitfähigkeit.von 20 mS/cm oder mehr bei 25° C und umfaßt folgende Komponenten:
A) Ein Leitsalz oder Leitsalzgemisch in einer Konzentration von > 1, 7 mol/l, enthaltend zumindest ein Ion mit einem Atom, das nicht identische Substituenten aufweist,
B) Ein Lösungsmittel, das entweder ein Lacton oder ein cyclisches Carbonat ist.

Der Vorteil der erfindungsgemäßen Elektrolytlösungen besteht zum einen darin, daß aufgrund des nur einen Lösungsmittels, besonders einfach und kostengünstig herzustellende Elektrolytlösungen bereitgestellt werden, die aufgrund des Lactons oder Carbonats eine hohe Spannungsstabilität, einen hohen Siedepunkt und gleichzeitig eine hohe Löslichkeit für Leitsalze aufweisen. Zum anderen besteht der Vorteil der erfindungsgemäßen Elektrolytlösungen darin, daß aufgrund des asymmetrisch substituierten Atom Leitsalze resultieren, die eine geringe Gitterehergie und damit eine erhöhte Löslichkeit in dem Lacton oder Carbonat aufweisen. Diese Leitsalze lassen sich.dementsprechend in höheren Konzentrationen in dem Lösungsmittel lösen als Leitsalze, die kein asymmetrisch substituiertes Atom aufweisen, so daß eine erhöhte Leitfähigkeit resultiert. Dadurch lassen sich erfindungsgemäß acetonitrilfreie Elektrolytlösungen mit nur einem Lösungsmittel bereitstellen, die trotzdem eine Leitfähigkeit von wenigstens 20 mS/cm bei 25° C aufweisen.

Vorteilhafterweise ist das asymmetrisch substituierte Atom der Komponente A) des Leitsalzes aus der 5. Hauptgruppe des Periodensystems, bevorzugt Stickstoff oder Phosphor ausgewählt. Günstigerweise ist das zumindest eine Ion in der Komponente A) ein Ammonium-Kation, wobei dieses Ammonium-Kation günstigerweise 4 nicht identische Substituenten aufweist und damit asymmetrisch substituiert ist. Derartige asymmetrisch substituierte Ammonium-Kationen eignen sich besonders gut als Kationen für Leitsalze für elektrochemische Kondensatoren und weisen wie bereits oben genannt, aufgrund der asymmetrischen Substitution eine erhöhte Löslichkeit in den Lösungsmitteln der Elektrolytlösung auf.

Vorteilhafterweise ist die Komponente A) in einer Konzentration zwischen 2 mol/l und 3 mol/l in der Elektrolytlösung vorhanden. In erfindungsgemäßen Elektrolytlösungen eingesetzte Leitsalze können, da sie asymmetrisch substituierte Atome mit nicht identischen Substituenten enthalten, leicht in diesen Konzentrationen in den Elektrolytlösungen gelöst werden, wobei aufgrund der hohen Konzentration auch eine erhöhte Leitfähigkeit resultiert.

Als Komponente B) werden bevorzugt γ-Butyrolacton, γ-Valerolacton sowie als Carbonat ein cyclisches Carbonat, bevorzugt Propylencarbonat, Ethylencarbonat oder Butylencarbonat eingesetzt. Diese genannten Lösungsmittel erlauben zum einen eine besonders hohe Löslichkeit der Leitsalze mit wenigstens einem asymmetrisch substituierten Atom, weisen eine besonders hohe Spannungsfestigkeit auf und sind darüber hinaus besonders einfach und billig erhältlich. Zudem sind sie nicht toxisch, nicht leichtentzündlich und besitzen einen weitaus kleineren Dampfdruck als Acetonitril und somit hohe Siedepunkte > 150°C.

Die Leitsalze der Komponente A) können sich dabei aus einer Kombination der folgenden Anionen und Kationen ergeben:
Kationen: Dimethylpyrrolidinium, Diethyldimethylammonium, 1-Butyl-3-methylimidazolium, 1-Ethyl-3-methylimidazolium, Triethylmethylammonium,
Anionen: Trifluormethansulfonat, Tetrafluoroborat, Hexafluorophosphat.

In dieser Auswahl weisen alle Kationen und von den Anionen das Trifluormethansulfonat zumindest ein asymmetrisch substituiertes Atom auf, so daß bei Kombination dieser Kationen und Anionen immer Leitsalze resultieren, die eine erhöhte Löslichkeit in den Lösungsmitteln der erfindungsgemäßen Elektrolytlösungen aufweisen.

Gegenstand der Erfindung ist weiterhin ein elektrochemischer Doppelschichtkondensator, der eine erfindungsgemäße Elektrolytlösung aufweist. Derartige elektrochemische Doppelschichtkondensatoren weisen aufgrund der erfindungsgemäßen Elektrolytlösung eine höhere Leistungs- und Energiedichte auf als Kondensatoren mit herkömmlichen acetonitrilfreien Elektrolytlösungen. Aufgrund der erfindungsgemäßen Elektrolytlösungen sind elektrochemische Doppelschichtkondensatoren mit diesen Elektrolytlösungen auch stabiler als Kondensatoren mit herkömmlichen acetonitrilfreien Elektrolytlösungen und zeigen auch bei sehr niedrigen Temperaturen von -40° C bessere elektrische Eigenschaften.

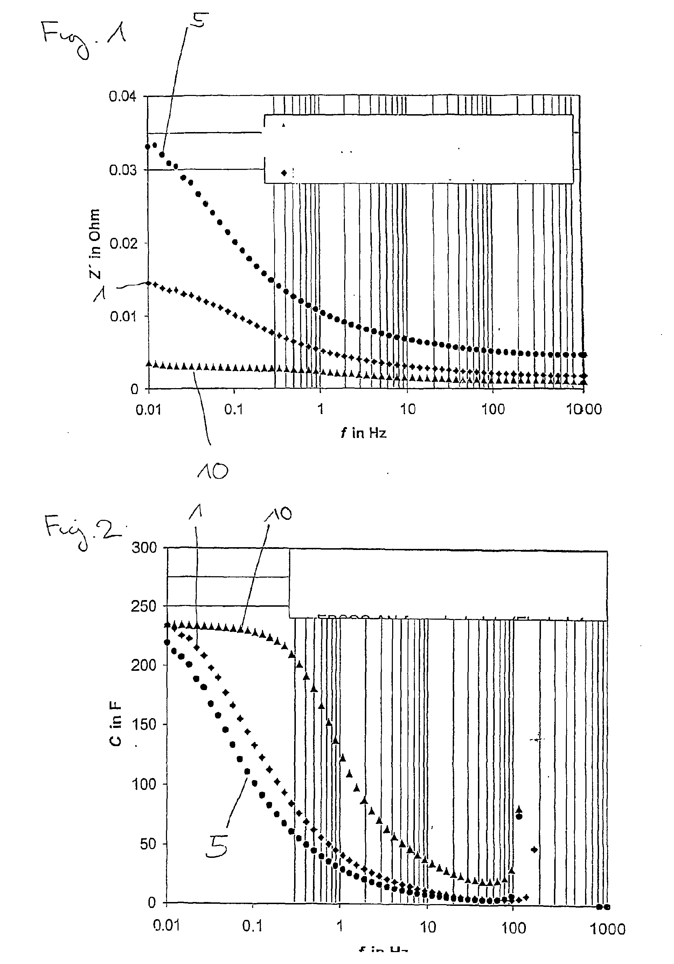

Im folgenden wird die Erfindung anhand von Ausführungsbeispielen und Figuren noch näher erläutert. Die Figuren 1 bis 7 zeigen Diagramme, bei denen die elektrischen Eigenschaften eines Doppelschichtkondensators mit einer erfindungsgemäßen acetonitrilfreien Elektrolytlösung mit denen eines Kondensators verglichen werden, der eine herkömmliche acetonitrilfreie Elektrolytlösung aufweist. Die Tabelle 1 zeigt in der Übersicht verschiedene erfindungsgemäße Elektrolytlösungen mit ihren Leitfähigkeiten im Vergleich zu zwei herkömmlichen Elektrolytlösungen. Tabelle 2 zeigt im Vergleich die elektrischen Eigenschaften von Doppelschichtkondensatoren, die mit erfindungsgemäßen oder herkömmlichen Elektrolytlösungen befüllt wurden. Die Tabelle 1 gibt die Zusammensetzung von acht erfindungsgemäßen Elektrolytlösungen (Beispiele 3 bis 10) und zwei herkömmlichen acetonitrilfreien Elektrolytlösungen (Beispiele 1 und 2) an:

**Tabelle 1:**

| Beispiel | Leitsalz | Lösungsmittel | Leitfähigkeit mS/cm [25°C] |
|---|---|---|---|
| 1 | 0,69 M Et₄NBF₄ | 100% Propylencarbonat | 12,2 |
| 2 | 0,9 M Et₄NBF₄ | Ethylencarbonat/Dimethylcarbonat 1:1 | 17,8 |
| 3 | 2 M Et₃MeNBF₄ | 100% γ-Butyrolacton | 25,9 |
| 4 | 1,75 M DMPF₃CSO₃ | 100% γ-Butyrolacton | 20,0 |
| 5 | 2 M DMPBF₄ | 100% γ-Butyrolacton | 23,2 |
| 6 | 2 M Et₂Me₂NBF₄ | 100% γ-Butyrolacton | 20,5 |
| 7 | 2 M BMIBF₄ | 100% γ-Butyrolacton | 21,4 |
| 8 | 3 M EMIBF₄ | 100 % γ-Butyrolacton | 23,4 |
| 9 | 2 M EMIBF₄ | 100% Ethylen-carbonat | 23,7 |
| 10 | 0, 5 M EMIBF₄ + 1,75 M Et₃MeNBF₄ | 100% γ-Butyrolacton | 24,5 |

In der Tabelle 1 bezeichnet DMPF₃CSO₃ Dimethylpyrrolidiniumtrifluormethansulfonat, DMPBF₄ Dimethylpyrolidiniumtetrafluoroborat, BMIBF₄ 1-Butyl-3-Methylimidazolium-tetrafluoroborat und EMIBF₄ 1-Ethyl-3-methylimidazolium-tetrafluoroborat.

Der Tabelle läßt sich entnehmen, daß die beiden herkömmlichen acetonitrilfreien Elektrolytlösungen, Beispiele 1 und 2, Leitsalze aufweisen, die kein asymmetrisch substituiertes Atom enthalten. Demzufolge ist das dort eingesetzte Leitsalz Tetraethylammoniumtetrafluoroborat aufgrund seiner geringen Löslichkeit nur in geringen Konzentrationen von 0,69 mol/l bis 0,9 mol/l in den Lösungsmitteln der Elektrolytlösung löslich. Daraus resultieren geringe Leitfähigkeiten zwischen 12,2 und 17,8 mS/cm.

Im Gegensatz dazu weisen die erfindungsgemäßen acetonitrilfreien Elektrolytlösungen, die Beispiele 3 bis 10, Leitsalze auf, bei denen wenigstens das Kation ein asymmetrisch substituiertes Atom aufweist (Triethylmethylammoniumtetrafluoroborat im Beispiel 3, Dimethylpyrrolidiniumtetrafluoroborat im Beispiel 5, Diethyldimethylammoniumtetrafluoroborat im Beispiel 6, 1-Butyl-3-methylimidazolium-tetrafluoroborat im Beispiel 7, 1-Ethyl-3-methylimidazolium-tetrafluoroborat in den Beispielen 8, 9 und 10). Im Beispiel 4 weist beim Leitsalz Dimethylpyrrolidiniumtrifluormethansulfonat sowohl das Anion als auch das Kation ein asymmetrisch substituiertes Atom auf. Der Tabelle 1 ist zu entnehmen, daß die erfindungsgemäß verwendeten Leitsalze mit dem asymmetrisch substituierten Atom aufgrund ihrer höheren Löslichkeit in höheren Konzentrationen in den erfindungsgemäßen Elektrolytlösungen gelöst werden können, wobei auch erheblich höhere Leitfähigkeiten zwischen 20 und 26 mS/cm resultieren. Als Lösungsmittel werden dabei in den vorliegenden Beispielen γ-Butyrolacton und Ethylencarbonat aus der Gruppe der Carbonate und Lactone verwendet, die beide hohe Spannungsstabilität und hohe Siedepunkte aufweisen, so daß die erfindungsgemäßen Elektrolytlösungen auch bei höheren Temperaturen bis 70°C eingesetzt werden können. Aufgrund der erhöhten Löslichkeit der Leitsalze präzipitieren diese auch bei sehr niedrigen Temperaturen nicht, so daß die erfindungsgemäßen Elektrolytlösungen auch bei sehr niedrigen Temperaturen eingesetzt werden können.

Die in Tabelle 1 genannten erfindungsgemäßen acetonitrilfreien Elektrolytlösungen haben darüber hinaus den Vorteil, daß aufgrund des nur einen Lösungsmittels diese besonders einfach und schnell hergestellt werden können und gleichzeitig aufgrund der hohen Stabilität dieses Lösungsmittels aus der Gruppe der Lactone oder Carbonate auch eine ausgezeichnete Langzeitstabilität aufweisen. Somit gibt die Erfindung erstmals acetonitrilfreie Elektrolyte mit einer Leitfähigkeit ab 20 mS/cm an, die nur ein Lösungsmittel enthalten. Wie bereits oben genannt, lassen sich acetonitrilfreie, herkömmliche Elektrolytlösungen bisher nur mittels Mischen von mehreren, zum Teil leicht flüchtigen und wenig spannungsstabilen Lösungsmitteln erhalten, wie beispielsweise in der WO 02/061776 A offenbart.

Tabelle 2 zeigt die elektrischen Eigenschaften von 120 Farad elektrochemischen Doppelschichtkondensatoren, die jeweils als Elektroden Tuchelektroden und einen dazwischen befindlichen Papierseparator enthalten. Die Doppelschichtkondensatoren wurden mit jeweils 14 ml Elektrolytlösung befüllt. Zwei Doppelschichtkondensatoren wurden dabei mit herkömmlichen acetonitrilfreien Elektrolytlösungen, den Beispielen 1 und 2 aus Tabelle 1 befüllt, während ein dritter Doppelschichtkondensator mit einer erfindungsgemäßen Elektrolytlösung, dem Beispiel 3 aus Tabelle 1 befüllt wurde. Bei den so aufgefüllten und auf 2,3 V aufgeladenen Kondensatoren wurde mittels elektrochemischer Impedanzspektroskopie der equivalent series resistance (ESR) bei 100 Hz und die Kapazität zwischen -40° C und 70° C bestimmt:

**Tabelle 2:**

| T. [°C] | Bsp. 1 Kapazität/F | Bsp. 1 ESR [100 Hz/mΩ] | Bsp. 2 Kapazität/F | Bsp. 2 ESR [100 Hz/mΩ] | Bsp. 3 Kapazität/F | Bsp. 3 ESR [100 Hz/mΩ] |
|---|---|---|---|---|---|---|
| -40 | 8,9 | 173,7 | El. gefroren | El. gefroren | 22,2 | 92,3 |
| -30 | 19,5 | 107,7 | El. gefroren | El. gefroren | 38,5 | 63,3 |
| 25 | 103,5 | 23,8 | 118,1 | 19,1 | 123,7 | 16,9 |
| 60 | 116,4 | 14,9 | 126,0 | 12,6 | 130,7 | 11,3 |
| 70 | 117,7 | 13,8 | 127,9 | 11,9 | 130,4 | 10,7 |

Der Tabelle läßt sich entnehmen, daß bei allen Temperaturen die Doppelschichtkondensatoren mit der erfindungsgemäßen Elektrolytlösungen einen kleineren ESR-Wert und eine größere Kapazität aufweisen als die Kondensatoren, die mit den herkömmlichen acetonitrilfreien Elektrolytlösungen befüllt sind. Elektrochemische Doppelschichtkondensatoren mit der erfindungsgemäßen Elektrolytlösung haben demnach größere Energie- und Leistungsdichten als Kondensatoren mit herkömmlichen acetonitrilfreien Elektrolytlösungen. Der Doppelschichtkondensator, der mit der herkömmlichen Elektrolytlösung nach Beispiel 2 (Ethylencarbonat/Dimethylcarbonat als Lösungsmittel) befüllt ist, ist bei Temperaturen unter -10° nicht mehr funktionstüchtig, da der Elektrolyt gefroren ist.

Die Figuren 1 bis 5 zeigen Diagramme, bei denen die elektrischen Eigenschaften von folgenden Kondensatoren miteinander verglichen werden:
1)eine Ausführungsform eines Kondensators mit einer erfindungsgemäßen Elektrolytlösung gemäß dem Beispiel 3 der Tabelle 1 (mit dem Bezugszeichen 1 gekennzeichnete Kurven in den Figuren),
2) ein Kondensator der eine herkömmliche acetonitrilfreie Elektrolytlösung gemäß Beispiel 1 aus Tabelle 1 aufweist (mit dem Bezugszeichen 5 gekennzeichnete Kurven in den Figuren)und
3) ein Kondensator mit einer herkömmlichen Elektrolytlösung, bei der als Leitsalz Tetraethylammoniumtetrafluoroborat in einer Konzentration von 0,9 mol/l in 100 % Acetonitril gelöst ist (mit dem Bezugszeichen 10 gekennzeichnete Kurven in den Figuren).

Figur 1 zeigt dabei die Frequenzabhängigkeit des Realteiles Z' der Impedanz in mΩ in Abhängigkeit von der Frequenz in Hz. Figur 1 kann entnommen werden, daß aufgrund der sehr geringen Viskosität und relativ hohen Polarität des Acetonitrils der Kondensator mit dem acetonitrilhaltigen Elektrolyt die geringste Impedanz aufweist, während der Kondensator mit dem herkömmlichen acetonitrilfreien Elektrolyt die höchste Impedanz aufweist. Der Kondensator mit dem erfindungsgemäßen acetonitrilfreien Elektrolyt weist dabei eine Impedanz auf, die zwischen der der beiden anderen Kondensatoren liegt. Somit stellen erfindungsgemäße Elektrolytlösungen eine Möglichkeit dar, einerseits die Nachteile des Acetonitrils, z.B. seine Leichtentzündlichkeit zu vermeiden, andererseits aber dennoch akzeptable Impedanzwerte zu erreichen. Die Leitfähigkeit der Elektrolytlösung bestimmt dabei den ionischen Widerstand des Separators, der mit der Elektrolytlösung getränkt ist. Eine Elektrolytlösung mit einer geringen Leitfähigkeit wird daher den ionischen Widerstand des Separators erhöhen. Da der ionische Widerstand des Separators auch zu Z' bei Frequenzen > 10 Hz beiträgt, haben die Doppelschichtkondensatoren mit den unterschiedlichen Elektrolyten bereits unterschiedlich große Z'-Werte bei hohen Frequenzen. Mit abnehmenden Frequenzen wird der Widerstand der Elektrolytlösung in den Poren der Elektrode der bestimmende Faktor für die Impedanz da bei niedrigeren Frequenzen mehr Poren der Elektrode zu Z' beitragen. Figur 1 zeigt darüber hinaus, daß Doppelschichtkondensatoren mit dem herkömmlichen acetonitrilfreien Elektrolyt die höchste Impedanz aufweisen, so daß diese Zellen sich während Ladungs- und Entladungszyklen auch mehr aufheizen als Doppelschichtkondensatoren mit erfindungsgemäßen Elektrolytlösungen.

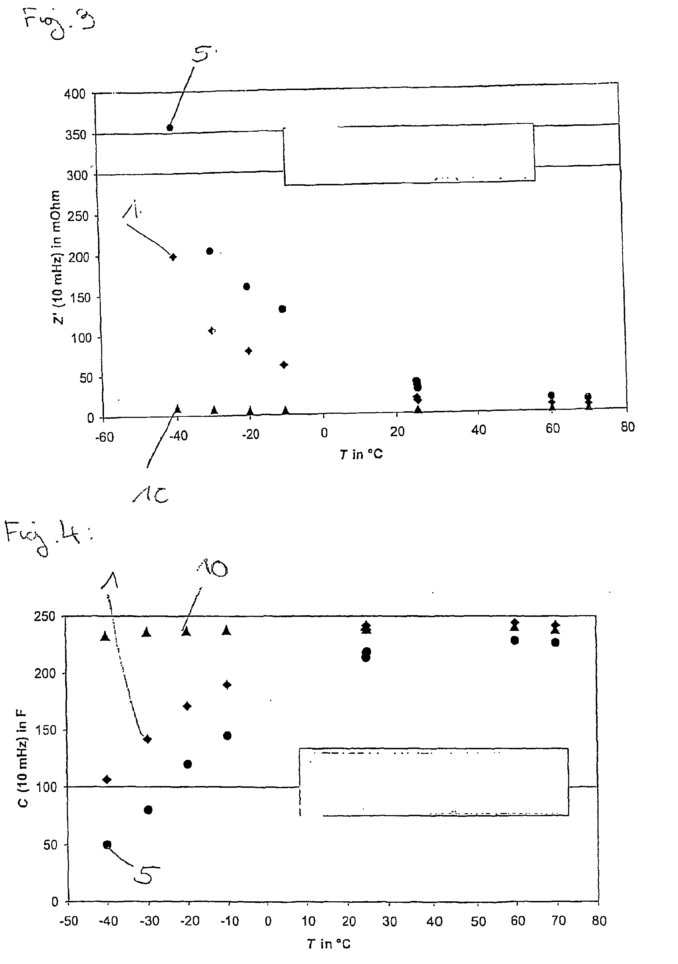

Figur 2 zeigt die Frequenzabhängigkeit der Kapazität in Abhängigkeit von der Frequenz im Hz für die Doppelschichtkondensatoren mit den drei unterschiedlichen Elektrolytlösungen. Auch diesem Diagramm läßt sich wieder entnehmen, daß der Doppelschichtkondensator mit der erfindungsgemäßen Elektrolytlösung nach Beispiel 3 in Tabelle 1 eine Kapazität in Abhängigkeit von der Frequenz aufweist, die über weite Bereiche zwischen der hohen Kapazität des Doppelschichtkondensators mit der acetonitrilhaltigen Elektrolytlösung und der Kapazität des Doppelschichtkondensators mit der herkömmlichen acetonitrilfreien Elektrolytlösung liegt. Der Figur läßt sich auch entnehmen, daß Doppelschichtkondensatoren mit erfindungsgemäßen Elektrolytlösungen mehr Energie speichern können, als Doppelschichtkondensatoren mit herkömmlichen acetonitrilfreien Elektrolytlösungen, wenn die Kondensatoren Ladungs- und Entladungszyklen im Zeitfenster von 10 Sekunden unterworfen werden. Der Grund für dieses unterschiedliche Verhalten liegt wieder in den unterschiedlichen Leitfähigkeiten der Elektrolytlösungen.

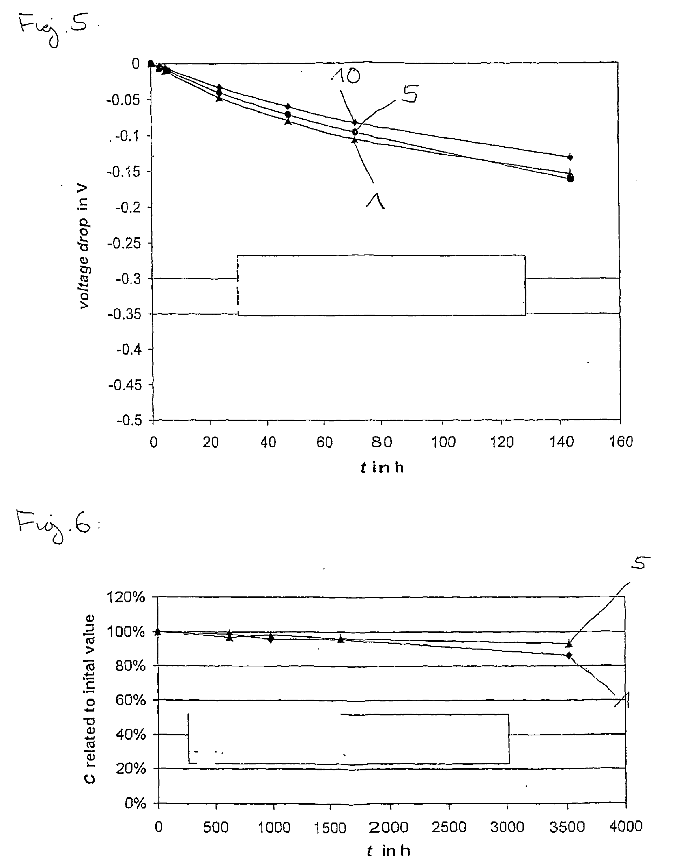

Figur 3 zeigt die Temperaturabhängigkeit des Realteils der Impedanz Z' bei einer Frequenz von 10 mHz in Abhängigkeit von der Temperatur zwischen -40° C und 70° C. Dabei ist wieder zu sehen, daß Doppelschichtkondensatoren mit den erfindungsgemäßen Elektrolytlösungen eine Impedanz aufweisen, die zwischen der Impedanz von Doppelschichtkondensatoren mit herkömmlichen acetonitrilfreien Elektrolytlösungen und der vom Doppelschichtkondensatoren mit acetonitrilhaltigen Elektrolytlösungen liegen. Ab Temperaturen über der Raumtemperatur nimmt Z' signifikant für alle Doppelschichtkondensatoren ab. Bei Temperaturen unterhalb von 0° C liegt die Impedanz von Doppelschichtkondensatoren mit erfindungsgemäßen Elektrolytlösungen immer noch in einem akzeptablen Bereich, so daß sich diese im Vergleich zur Doppelschichtkondensatoren mit herkömmlichen acetonitrilfreien Elektrolytlösungen besser für den Einsatz bei niedrigen Temperaturen eignen.

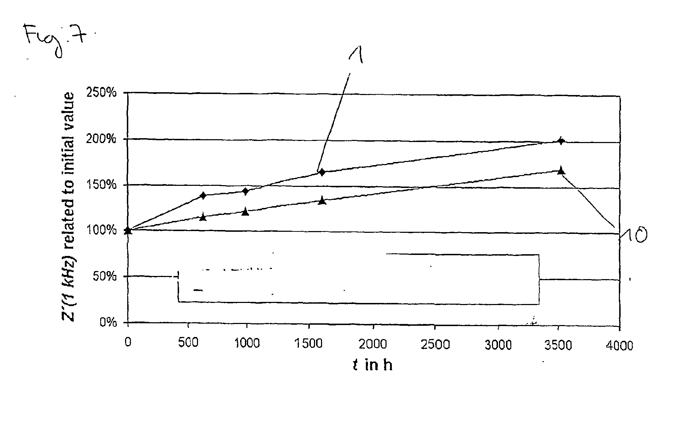

Figur 4 zeigt die Kapazität in Farad bei einer Frequenz von 10 mHz in Abhängigkeit von der Temperatur zwischen -40° C und 70° C. Dabei nimmt der Doppelschichtkondensator mit der erfindungsgemäßen Elektrolytlösung wieder eine Mittelstellung ein zwischen dem Doppelschichtkondensator mit der acetonitrilhaltigen Elektrolytlösung und demjenigen mit der herkömmlichen acetonitrilfreien Elektrolytlösung. Bei niedrigen Temperaturen unterhalb 0° C sorgt die Zunahme des Widerstandes für eine Abnahme der Kapazität. Bei Temperaturen oberhalb Raumtemperatur tritt ein zweiter Effekt auf. Der durchschnittliche Abstand der Helmholzschicht zur Oberfläche der Elektrode nimmt aufgrund der zunehmenden Braunschen Molekularbewegung der Ionen bei höheren Temperaturen zu. Da die Kapazität invers proportional zum Abstand zwischen der Helmholzschicht und der Elektrodenoberfläche ist, nimmt somit die Kapazität bei allen in Figur 4 getesteten Doppelschichtkondensatoren bei sehr hohen Temperaturen wieder ab.

Figur 5 zeigt das Selbstentladungsverhalten der 3 Doppelschichtkondensatoren mit den unterschiedlichen Elektrolytlösungen bei 25° C. Alle Zellen wurden für 24 Stunden bei 2,5 V aufgeladen. Danach wurden die Zellen von der Energieversorgung abgetrennt und der Abfall der Spannung bei 25° C bestimmt. Figur 5 kann dabei entnommen werden, daß alle Doppelschichtkondensatoren in etwa gleiches Selbstentladungsverhalten aufweisen.

Figur 6 zeigt einen Ausdauertest bei 2,5 V Spannung und 60° C mit dem Ziel, die Stabilität der Doppelschichtkondensatoren mit den entsprechenden Elektrolytlösungen zu vergleichen. Bei diesem Test wurde die Kapazität bei 10 A konstantem Entladungsstrom bei 25° C erhalten. Der Widerstand der Kondensatoren wurde bei einer Frequenz von 1 KHz bestimmt.
Bei diesem Test sprach bei dem Doppelschichtkondensator der mit dem herkömmlichen acetonitrilfreien Elektrolyten nach Beispiel 1 in Tabelle 1 befüllt war, bereits nach 400 Stunden die Sollbruchstelle aufgrund der Erhöhung des Innendrucks des Kondensators an, so daß dieser Doppelschichtkondensator nicht in dem Ausdauertest einbezogen wurde. Die Zunahme des Innendrucks bei diesem Kondensator ist dabei auf eine Zersetzung der Elektrolytlösung zurückzuführen. Figur 6 läßt sich somit entnehmen, daß Doppelschichtkondensatoren mit einer erfindungsgemäßen Elektrolytlösung (mit 1 gekennzeichnete Kurve) eine vergleichbare Stabilität aufweisen wie Doppelschichtkondensatoren mit einer acetonitrilhaltigen Elektrolytlösung (mit 5 gekennzeichnete Kurve).

Figur 7 zeigt die Entwicklung der Impedanz Z' bei 1 KHz während des 2,5 V/60° C Ausdauertest in Figur 6 in Abhängigkeit von der Zeit. Dieser Figur läßt sich dabei entnehmen, daß beide Kondensatoren eine gute Stabilität aufweisen.

Die vorliegende Erfindung beschränkt sich nicht auf die hier dargestellten Ausführungsbeispiele. Weitere Variationen sind vor allem möglich im Bezug auf andere Leitsalze, die andere Kationen und Anionen mit asymmetrisch substituierten Atomen enthalten.

## Patentansprüche

1. Acetonitrilfreie, nur ein Lösungsmittel aufweisende Elektrolytlösung für elektrochemische Doppelschichtkondensatören mit einer Leitfähigkeit von 20 mS/cm oder mehr bei 25°C, umfassend folgende Komponenten:
A) ein Leitsalz oder Leitsalz-Gemisch in einer Konzentration von größer 1,7 mol/l, enthaltend zumindest ein Ion mit einem Atom, das nicht identische Substituenten aufweist,
B) ein Lösungsmittel, das entweder ein Lacton oder ein cyclisches Carbonat ist.

2. Elektrolytlösung nach dem vorhergehenden Anspruch,
- bei der das Atom, das nicht identische Substituenten aufweist, aus der 5. Hauptgruppe des Periodensystems ausgewählt ist.

3. Elektrolytlösung nach dem vorhergehenden Anspruch,
- bei der das Atom, das nicht identische Substituenten aufweist, N oder P ist.

4. Elektrolytlösung nach einem der vorhergehenden Ansprüche,
- bei der das zumindest eine Ion in der Komponente A) ausgewählt ist aus:
- Ammonium-Kation, Phosphohium-Kation und Imidazolium-Kation.

5. Elektrolytlösung nach einem der vorhergehenden Ansprüche,
- bei der Komponente A) in einer Konzentration zwischen 2 mol/l und 3 mol/l vorhanden ist.

6. Elektrolytlösung nach einem der vorhergehenden Ansprüche,
- bei der Komponente B) eines der folgenden Lösungsmittel ist:
- γ-Butyrolacton, γ-Valerolacton.

7. Elektrolytlösung nach Anspruch 1,
- bei der das cyclische Carbonat eines der folgenden Lösungsmittel ist:
- Propylencarbonat, Ethylencarbonat, Butylencarbonat.

8. Elektrolytlösung nach einem der vorhergehenden Ansprüche,
- bei der Komponente A) aus ausgewählt ist aus Leitsalzen die sich aus einer Kombination der folgenden Anionen und Kationen ergeben:
- Kationen: Dimethylpyrrolidinium, Diethyldimethylammonium, 1-Butyl-3-methylimidazolium, 1-Ethyl-3-methylimidazolium, Triethylmethylammonium,
- Anionen: Trifluormethansulfonat, Tetrafluoroborat, Hexafluorophosphat.

9. Elektrolytlösung.nach einem der vorhergehenden Ansprüche,
- bei der Komponente A) Dimethylpyrolidiniumtrifluormethan-- sulfonat ist,
- bei der Komponente B) γ-Butyrolacton ist.

10. Elektrolytlösung nach einem der Ansprüche 1 bis 8,
- bei der Komponente A) Dimethylpyrolidiniumtetrafluoroborat ist,
- bei der Komponente B) γ-Butyrolacton ist.

11. Elektrolytlösung nach einem der Ansprüche 1 bis 8,
- bei der Komponente A) 1-Butyl-3-methylimidazoliumtetrafluoroborat ist,
- bei der Komponente B) γ-Butyrolacton ist.

12. Elektrolytlösung nach einem der Ansprüche 1 bis 8,
- bei der Komponente A) 1-Ethyl-3-methylimidazoliumtetrafluoroborat ist,
- bei der Komponente B) γ-Butyrolacton ist.

13. Elektrolytlösung nach einem der Ansprüche 1 bis 8,
- bei der Komponente A) 1-Ethyl-3-methylimidazoliumtetrafluoroborat ist,
- bei der Komponente B) Ethylencarbonat ist.

14. Elektrolytlösung nach einem der Ansprüche 1 bis 8,
- bei der Komponente A) ein Gemisch aus 1-Ethyl-3-methylimidazoliumtetrafluoroborat und Triethylmethylammoniumtetrafluoroborat ist,
- bei der Komponente B) γ-Butyrolacton ist.

15. Elektrolytlösung nach einem der Ansprüche 1 bis 8,
- bei der Komponente A) Triethylmethylammonium-tetrafluoroborat ist,
- bei der Komponente B) γ-Butyrolacton ist.

16. Elektrochemischer Doppelschichtkondensator mit Elektroden,
- der eine Elektrolytlösung nach einem der Ansprüche 1 bis 15 aufweist.

17. Elektrochemischer Doppelschichtkondensator nach dem vorhergehenden Anspruch,
- mit einem zwischen den Elektroden befindlichen porösen Separator, der mit der Elektrolytlösung imprägniert ist.

18. Doppelschichtkondensator nach einem der Ansprüche 16 oder 17,
- bei dem die Elektroden metallische Folien sind, die mit einem Elektrodenmaterial hoher Oberfläche beschichtet sind, das ausgewählt ist aus:
- Kohlenstoffpulver und Kohlenstofftücher.

## Claims

1. Acetonitrile-free electrolyte solution having only one solvent for electrochemical double layer capacitors having a conductivity of 20 mS/cm or more at 25°C, comprising the following components:
A) a conductive salt or conductive salt mixture in a concentration of greater than 1.7 mol/l, containing at least one ion having an atom which has nonidentical substituents,
B) a solvent which is either a lactone or a cyclic carbonate.

2. Electrolyte solution according to the preceding claim, in which the atom which has nonidentical substituents is selected from main group 5 of the Periodic Table.

3. Electrolyte solution according to the preceding claim, in which the atom which has nonidentical substituents is N or P.

4. Electrolyte solution according to one of the preceding claims, in which the at least one ion in component A) is selected from:
ammonium cation, phosphonium cation and
imidazolium cation.

5. Electrolyte solution according to one of the preceding claims, in which component A) is present in a concentration between 2 mol/l and 3 mol/l.

6. Electrolyte solution according to one of the preceding claims, in which component B) is one of the following solvents:
γ-butyrolactone, γ-valerolactone.

7. Electrolyte solution according to Claim 1,
in which the cyclic carbonate is one of the following solvents:
propylene carbonate, ethylene carbonate, butylene carbonate.

8. Electrolyte solution according to one of the preceding claims, in which component A) is selected from conductive salts which arise from a combination of the following anions and cations:
cations: dimethylpyrrolidinium, diethyldimethylammonium, 1-butyl-3-methylimidazolium, 1-ethyl-3-methylimidazolium, triethylmethylammonium,
anions: trifluoromethanesulphonate, tetrafluoroborate, hexafluorophosphate.

9. Electrolyte solution according to one of the preceding claims,
in which component A) is dimethylpyrrolidinium trifluoromethanesulphonate,
component B) is γ-butyrolactone.

10. Electrolyte solution according to one of Claims 1 to 8,
in which component A) is dimethylpyrrolidinium tetrafluoroborate,
component B) is γ-butyrolactone.

11. Electrolyte solution according to one of Claims 1 to 8,
in which component A) is 1-butyl-3-methylimidazolium tetrafluoroborate,
component B) is γ-butyrolactone.

12. Electrolyte solution according to one of Claims 1 to 8,
in which component A) is 1-ethyl-3-methylimidazolium tetrafluoroborate,
component B) is γ-butyrolactone.

13. Electrolyte solution according to one of Claims 1 to 8,
in which component A) is 1-ethyl-3-methylimidazolium tetrafluoroborate,
component B) is ethylene carbonate.

14. Electrolyte solution according to one of Claims 1 to 8,
in which component A) is a mixture of 1-ethyl-3-methylimidazolium tetrafluoroborate and triethylmethylammonium tetrafluoroborate,
component B) is γ-butyrolactone.

15. Electrolyte solution according to one of Claims 1 to 8,
in which component A) is triethylmethylammonium tetrafluoroborate,
component B) is γ-butyrolactone.

16. Electrochemical double layer capacitor with electrodes,
which has an electrolyte solution according to one of Claims 1 to 15.

17. Electrochemical double layer capacitor according to the preceding claim
with a porous separator which has been impregnated with the electrolyte solution and is disposed between the electrodes.

18. Double layer capacitor according to one of Claims 16 or 17,
in which the electrodes are metallic foils which have been coated with an electrode material of high surface area which is selected from:
carbon powders and carbon cloths.

## Revendications

1. Solution d'électrolyte, exempte d'acétonitrile et n'ayant qu'un solvant, pour des condensateurs électrochimiques à couche double ayant une conductivité supérieure ou égale à 20 mS/cm à 25°C, comprenant des constituants suivants :
A) un sel conducteur ou un mélange de sels conducteurs en une concentration supérieure à 1,7 mole/l, contenant au moins un ion ayant un atome qui n'a pas des substituants identiques,
B) un solvant qui est une lactone ou un carbonate cyclique.

2. Solution d'électrolyte suivant la revendication précédente,
- dans laquelle l'atome qui n'a pas de substituants identiques est choisi dans le cinquième groupe principal de la classification périodique des éléments.

3. Solution d'électrolyte suivant la revendication précédente,
- dans laquelle l'atome, qui n'a pas de substituants identiques, est N ou P.

4. Solution d'électrolyte suivant l'une des revendications précédentes,
- dans laquelle le au moins un ion du constituant A) est choisi parmi :
- le cation ammonium, le cation phosphonium et le cation imidazolium.

5. Solution d'électrolyte suivant l'une des revendications précédentes,
- dans laquelle le constituant A) est présent en une concentration comprise entre 2 moles/l et 3 moles/l.

6. Solution d'électrolyte suivant l'une des revendications précédentes,
- dans laquelle le constituant B) est l'un des solvants suivants :
- la γ-butyrolactone, la γ-valérolactone.

7. Solution d'électrolyte suivant la revendication 1,
- dans laquelle le carbonate cyclique est l'un des solvants suivants :
- le carbonate de propylène, le carbonate d'éthylène, le carbonate de butylène.

8. Solution d'électrolyte suivant l'une des revendications précédentes,
- dans laquelle le constituant A) est choisi parmi des sels conducteurs qui sont obtenus à partir d'une combinaison des anions et des cations suivants :
- cations : diméthylpyrrolidinium, diéthyldiméthylammonium, 1-butyl-3-méthylimidazolium, 1-éthyl-3-méthylimidazolium, triéthylméthylammonium ;
- anions : trifluorométhanesulfonate, tétrafluoroborate, hexafluorophosphate.

9. Solution d'électrolyte suivant l'une des revendications précédentes,
- dans laquelle le constituant A) est le trifluorométhanesulfonate de diméthylpyrrolidinium,
- dans laquelle le constituant B) est la γ-butyrolactone.

10. Solution d'électrolyte suivant l'une des revendications 1 à 8,
- dans laquelle le constituant A) est le tétrafluoroborate de diméthylpyrrolidinium,
- dans laquelle le constituant B) est la γ-butyrolactone.

11. Solution d'électrolyte suivant l'une des revendications 1 à 8,
- dans laquelle le constituant A) est le tétrafluoroborate de 1-butyl-3-méthylimidazolium,
- dans laquelle le constituant B) est la γ-butyrolactone.

12. Solution d'électrolyte suivant l'une des revendications 1 à 8,
- dans laquelle le constituant A) est le tétrafluoroborate de 1-éthyl-3-méthylimidazolium,
- dans laquelle le constituant B) est la γ-butyrolactone.

13. Solution d'électrolyte suivant l'une des revendications 1 à 8,
- dans laquelle le constituant A) est le tétrafluoroborate de 1-éthyl-3-méthylimidazolium,
- dans laquelle le constituant B) est le carbonate d'éthylène.

14. Solution d'électrolyte suivant l'une des revendications 1 à 8,
- dans laquelle le constituant A) est un mélange de tétrafluoroborate de 1-éthyl-3-méthylimidazolium et de tétrafluoroborate de triéthylméthylammonium,
- dans laquelle le constituant B) est la γ-butyrolactone.

15. Solution d'électrolyte suivant l'une des revendications 1 à 8,
- dans laquelle le constituant A) est le tétrafluoroborate de triéthylméthylammonium,
- dans laquelle le constituant B) est la γ-butyrolactone.

16. Condensateur électrochimique à couche double ayant des électrodes,
- qui comporte une solution d'électrolyte suivant l'une des revendications 1 à 15.

17. Condensateur électrochimique à couche double suivant la revendication précédente,
- ayant un séparateur poreux qui se trouve entre les électrodes et qui est imprégné de la solution d'électrolyte.

18. Condensateur électrochimique à couche double suivant l'une des revendications 16 ou 17,
- dans lequel les électrodes sont des films métalliques qui sont recourverts d'un matériau d'électrode de grande surface choisi parmi :
- de la poudre de carbone ou de la toile de carbone.
